# EUROPÄISCHE PATENTSCHRIFT

(11) **EP 0 747 674 B1**
(45) Veröffentlichungstag und Bekanntmachung des Hinweises auf die Patenterteilung: **10.07.2002**
(21) Anmeldenummer: 96106330.2
(22) Anmeldetag: 23.04.1996
(51) Int. Cl.: G01D 5/38, G01D 5/36

(54) **Lichtelektrische Positionsmesseinrichtung**
Photo-electric position measuring device
Dispositif photo-électrique de mesure de positions

(30) Priorität: 10.06.1995 DE 19521295
(43) Veröffentlichungstag der Anmeldung: 11.12.1996
(73) Patentinhaber: Dr. Johannes Heidenhain GmbH, 83292 Traunreut (DE)
(72) Erfinder: Huber, Walter, 83278 Traunstein (DE)

(56) Entgegenhaltungen:
- EP-A- 0 163 362
- DE-A- 3 416 864
- DE-A- 3 834 676
- DE-A- 4 431 899
- US-A- 5 260 568
- PATENT ABSTRACTS OF JAPAN vol. 008, no. 259 (P-317), 28.November 1984 & JP 59 132311 A (SONII MAGUNESUKEERU KK), 30.Juli 1984,

## Beschreibung

Die Erfindung betrifft eine lichtelektrische Positionsmeßeinrichtung, bei der Licht einer Lichtquelle von mehreren zueinander verschiebbaren Gittern positionsabhängig moduliert wird, wenn diese zueinander verschoben werden. Hierbei interferieren die an den Gittern gebeugten Lichtstrahlenbündel miteinander, wobei die phasenversetzten Interferenzsignale mittels mehrerer Fotodetektoren erfaßt werden.

Eine derartige Positionsmeßeinrichtung ist beispielsweise in der EP-0 163 362-B1 beschrieben. Ein reflektierendes Maßstabgitter ist hierbei relativ verschiebbar zu einem Abtastgitter angeordnet. Das Abtastgitter ist als Phasengitter mit einem bestimmten Verhältnis der Stegbreiten zu den Furchenbreiten ausgeführt, um drei elektrische Signale zu erzeugen, die 120° gegeneinander phasenverschoben sind. Auf jeden von drei nachgeordneten Detektoren wird eine Gruppe von Beugungsstrahlen gleicher Richtung fokussiert. Bei diesen Gruppen von Beugungsstrahlen gleicher Richtung spricht man auch von sogenannten resultierenden Beugungsordnungen. Die Beugungsstrahlen n-ter resultierender Beugungsordnung entsprechen der Gruppe von Strahlen, die aus dem Gesamtsystem der beiden Gitter richtungsmäßig so austreten, als wären sie abgesehen von der Reflexion am Maßstab nur von einem der Gitter in n-ter Beugungsordnung abgelenkt worden.
Das verwendete Abtastgitter wird optisch dergestalt ausgelegt bzw. dimensioniert, daß die unterschiedlichen Beugungsordnungen den Signalen mit dem gewünschten Phasenversatz entsprechen. Um detektorseitig die räumliche Trennung der verschiedenen Signalanteile sicherzustellen, muß die vorgesehene Abbildungsoptik zwischen dem Abtastgitter und den Detektoren eine bestimmte Minimalbrennweite aufweisen. Bei einem derartig aufgebauten Meßsystem mit einer Teilungsperiode T=20µm und einer verwendeten Wellenlänge von 880nm beträgt die Brennweite des Kondensors ca. 30mm, was wiederum einen relativ voluminösen Aufbau des Abtastkopfes zur Folge hat.
Da die erwähnte Minimalbrennweite der Abbildungsoptik näherungsweise proportional zur Teilungsperiode der verwendeten Teilungen bzw. Gitter ist, resultiert dieses Baugrößen-Problem insbesondere, wenn Maßstäbe mit gröberen Teilungsperioden auf Grundlage dieses Meßprinzipes abgetastet werden sollen.

Aus der DE-34 16 864-C2 ist eine Positionsmeßeinrichtung bekannt, bei der der Maßstab eine Transversalteilung umfaßt, die mit einer Abtastplatte abgetastet wird, die eine Blendenstruktur aufweist. Die Transversalteilung besteht bei dieser Positionsmeßeinrichtung aus mehreren streifenförmigen Beugungselementen, die in Meßrichtung nebeneinander angeordnet sind und parallel zur Meßrichtung verlaufende Gitterstege aufweisen. Die einzelnen Beugungselemente unterscheiden sich hinsichtlich ihrer transversalen Teilungsperioden und lenken daher ein auftreffendes Lichtbündel in unterschiedliche Richtungen ab. Wird diese Transversalteilung durch die Spalte der Abtastplatte hindurch beleuchtet, so werden abgelenkte Lichtstrahlenbündel erzeugt, deren Ablenkwinkel von der transversalen Teilungsperiode und somit von dem beleuchteten transversalen Gitterbereich abhängt, woraus die Maßstabsposition abgeleitet wird. Unterschiedlich abgelenkte Lichtstrahlenbündel werden durch eine Linse auf verschiedene Fotodetektoren in der Brennebene der Linse fokussiert.
Die Erzeugung der positionsabhängig modulierten Signale erfolgt in dieser bekannten Positionsmeßeinrichtung auf Grundlage des Moire-Prinzips, d.h. es ist keine Auswertung interferierender Teilstrahlenbündel zur Positionsbestimmung vorgesehen.

Auch bei der bekannten Positionsmeßeinrichtung gemäß der EP-0 220 757-B1 besitzt der Maßstab in Meßrichtung hintereinander angeordnete Bereiche mit einer Transversalteilung und reflektierende oder durchlässige Bereiche. Die Transversalteilungs-Bereiche sind als Phasengitter ausgeführt, deren Gitterparameter derart gewählt sind, daß die entstehende 0. Beugungsordnung ausgelöscht wird und alle anderen Beugungsordnungen nicht auf den Fotodetektor treffen. Die Bereiche mit der Transversalteilung werden somit vom Fotodetektor als nicht reflektierende bzw. durchlässige Bereiche gesehen, wirken allerdings nicht richtungsselektiv hinsichtlich mehrerer vorhandener Fotodetektoren.

Der vorliegenden Erfindung liegt die Aufgabe zugrunde, eine lichtelektrische Positionsmeßeinrichtung zu schaffen, die einfach aufgebaut und kostengünstig herzustellen ist. Hierbei soll das z.B. aus der EP-0 163 362-B1 bekannte Abtastprinzip einsetzbar sein, d.h. die Signalerzeugung basiert auf der Interferenz von Lichtstrahlenbündeln, die an ein oder mehreren Gitterteilungen gebeugt werden. Gefordert ist dabei insbesondere auch die Möglichkeit zur Abtastung gröberer Teilungsperioden bei gleichzeitig kompakter Bauweise des Abtastkopfes.

Diese Aufgabe wird mit einer Positionsmeßeinrichtung gelöst, welche die Merkmale des Anspruches 1 aufweist.

Vorteilhafte Ausgestaltungen der erfindungsgemäßen Positionsmeßeinrichtung ergeben sich aus den aufgeführten Maßnahmen in den abhängigen Ansprüchen.

Ein wichtiger Vorteil der erfindungsgemäßen Positionsmeßeinrichtung ist darin zu sehen, daß damit auf einfache Weise gegeneinander phasenverschobene Abtastsignale erzeugbar sind, wobei eine Trennung der resultierenden Beugungsordnungen longitudinal (d.h. in Meßrichtung) nicht mehr notwendig ist. Dadurch ist die geforderte kurze Brennweite der verwendeten Abbildungsoptik gewährleistet, d.h. es ergibt sich eine kompakte Bauweise des Abtastkopfes.

Desweiteren erweist sich als vorteilhaft, daß mit Hilfe der erfindungsgemäßen Positionsmeßeinrichtung durch eine (Quasi)-Einfeldabtastung positionsabhängige Abtastsignale erzeugt werden können, die unempfindlich gegenüber einer Verschmutzung und/oder Teilungsfehlern des Maßstabs sind. Hierdurch sind relativ große Toleranzen der Maßstabteilung zulässig, wodurch eine kostengünstige Fertigung möglich wird.

Darüber hinaus gewährleistet die erfindungsgemäße Positionsmeßeinrichtung eine hinreichende Abstandsunempfindlichkeit zwischen Maßstab- und Abtastteilung.

Anhand der Zeichnungen seien im folgenden weitere Einzelheiten und Vorteile der erfindungsgemäßen Positionsmeßeinrichtung erläutert.

Hierbei zeigt
- Figur 1: eine schematische Gesamt-Darstellung der Positionsmeßeinrichtung gemäß der Erfindung;
- Figur 2: eine schematisierte Strahlengang-Darstellung einer Positionsmeßeinrichtung, bei der miteinander interferierende Strahlenbündel zur Erzeugung positionsabhängiger Signale eingesetzt werden;
- Figur 3: eine mögliche Ausführungsform eines Abtastgitters der erfindungsgemäßen Positionsmeßeinrichtung;
- Figur 4: einen Ausschnitt des Abtastgitters aus Figur 3;
- Figur 5: eine schematische Darstellung der Strahlengänge innerhalb der erfindungsgemäßen Positionsmeßeinrichtung, bei der ein Abtastgitter gemäß den Figuren 3 und 4 eingesetzt wird.

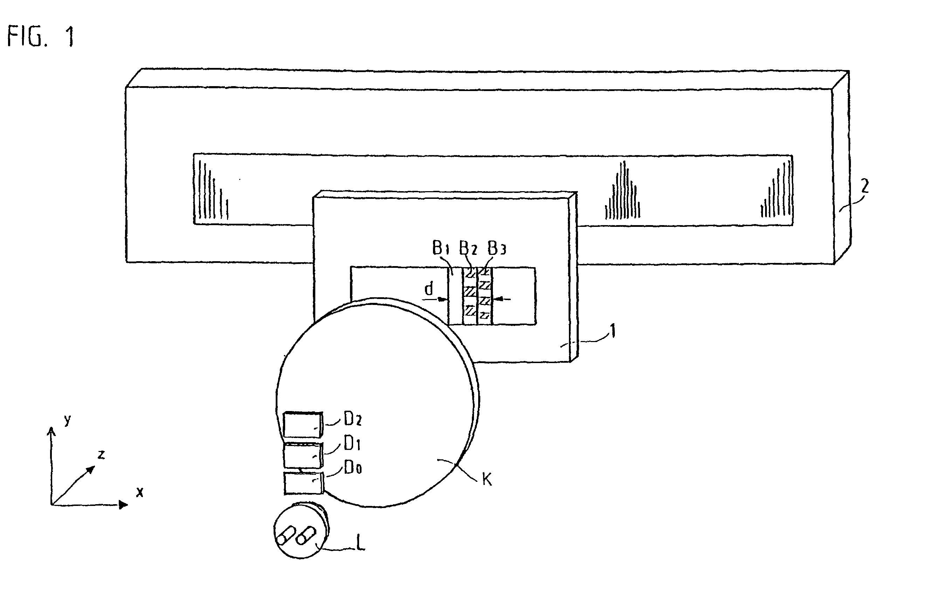

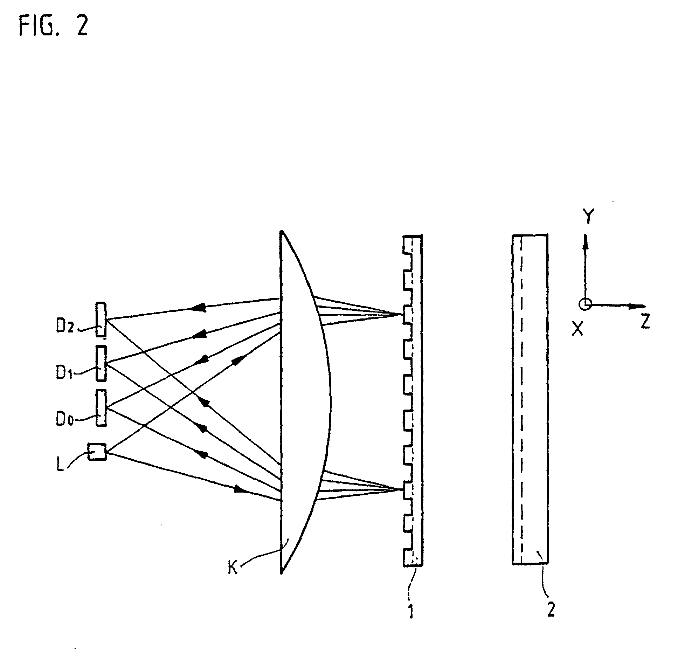

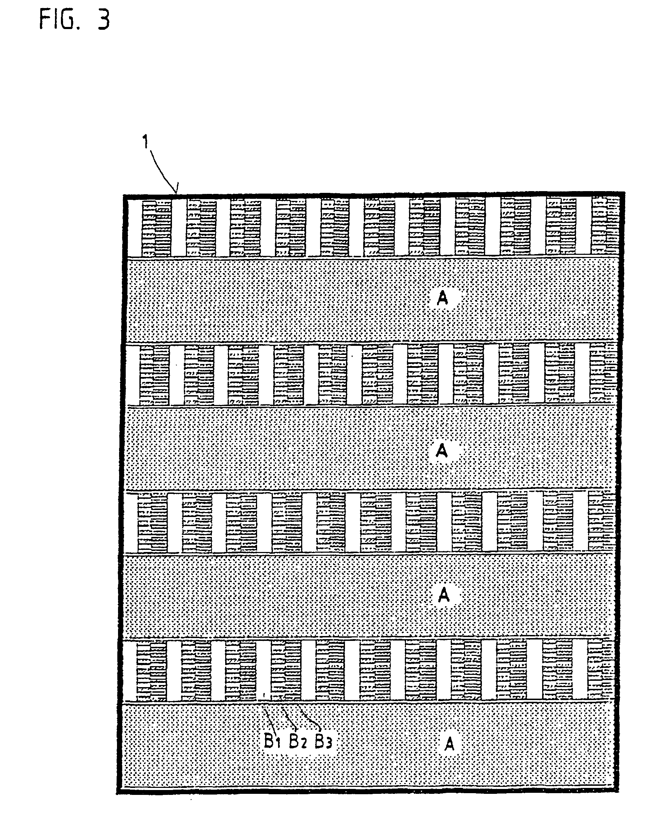

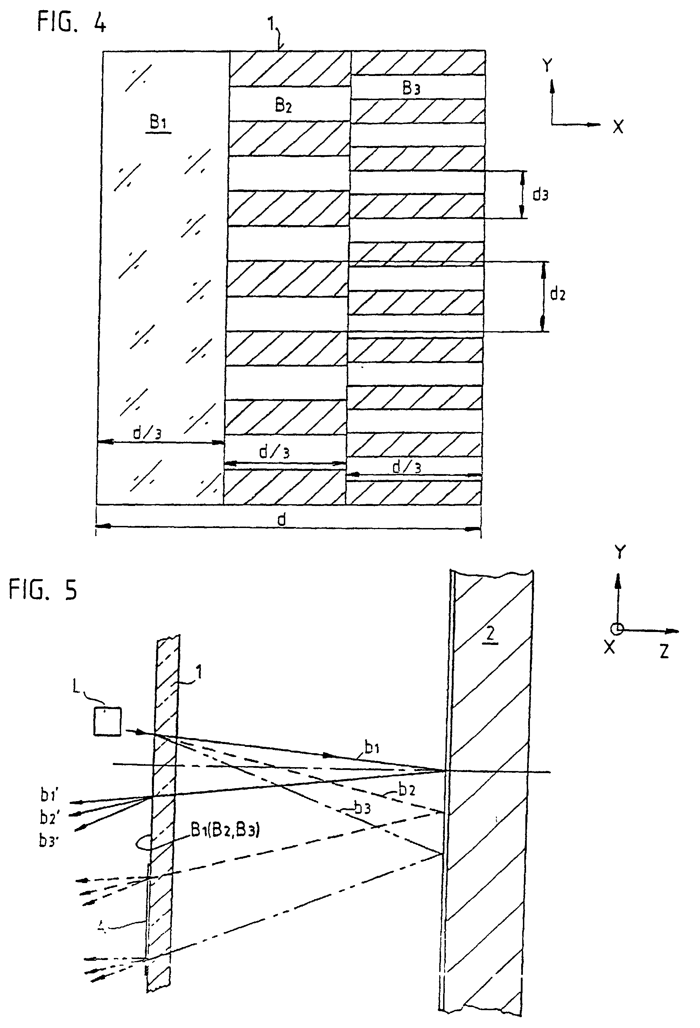

Das grundsätzliche Funktionsprinzip der erfindungsgemäßen Positionsmeßeinrichtung sei zunächst anhand der Figur 1 kurz erläutert. Das entsprechende Optikschema ist in Figur 2 gezeigt.
Hierbei wird Licht einer Lichtquelle L durch eine Kollimatorlinse K kollimiert und trifft auf ein Phasengitter 1, das eine bestimmte Teilungsperiode d aufweist. Innerhalb der erfindungsgemäßen Positionsmeßeinrichtung wird nun dieses erste Gitter 1 als Abtastgitter 1 mit einer speziellen Transversalstruktur ausgebildet, um mehrere gegeneinander phasenverschobene, positionsabhängige Abtastsignale zu erzeugen, wenn das Maßstabgitter 2 und das Abtastgitter 1 relativ zueinander in Meßrichtung X verschoben werden. In Figur 3 ist ein Abtastgitter 1 gemäß der vorliegenden Erfindung gezeigt; Figur 4 stellt einen vergrößerten Ausschnitt des Abtastgitters 1 aus Figur 3 dar. Das Abtastgitter 1 weist im dargestellten Ausführungsbeispiel eine in Meßrichtung X periodische Aneinanderreihung von zum Teil transversal strukturierten Bereichen B₁, B₂, B₃ auf. In Meßrichtung X betrachtet sind die Bereiche B₁, B₂, B₃ etwa gleich breit. Die Summe der Breiten eines ersten, eines zweiten und eines dritten Bereiches B₁, B₂, B₃ entspricht der Teilungsperiode d des Abtastgitters, die mit der Teilungsperiode c eines Maßstabgitters 2 identisch sein kann, aber nicht muß. Die Breite jedes Bereiches B₁, B₂, B₃ beträgt in dieser Ausführungsform demnach d/3.

Die zweiten und dritten Bereiche B₂, B₃ bestehen aus transversal zur Meßrichtung X angeordneten Gittern, die in Y-Richtung unterschiedliche transversale Gitterkonstanten d₂ und d₃ aufweisen. Die Teilungsstriche der einzelnen Gitter sind dabei parallel zur Meßrichtung X orientiert. Die als transversal geblazte Phasengitter ausgebildeten Bereiche B₂ und B₃ sind ferner derart dimensioniert bzw. dahingehend optimiert, daß die darauf auftreffenden Strahlenbündel jeweils als +1. Beugungsordnung abgelenkt werden. Trifft nun - wie in Figur 5 schematisch dargestellt ist - ein kollimiertes Lichtstrahlenbündel auf das Abtastgitter 1, so lenkt jeder der transversal unterschiedlich strukturierten Bereiche B₂, B₃ das einfallende Lichtstrahlenbündel im wesentlichen in die dem jeweiligen Bereich B₂ bzw. B₃ zugehörige +1. transversale Beugungsordnung b₂ bzw. b₃ ab. Aufgrund der unterschiedlich gewählten Gittterparameter in den Bereichen B₂, B₃ erfolgt jeweils eine andere winkelmäßige Ablenkung der gebeugten Teilstrahlenbündel. Die Bereiche B₂, B₃ weisen demzufolge jeweils eine entsprechend ihrer Gitterkonstanten d₂, d₃ unterschiedliche Richtungsselektivität für die gebeugten Teilstrahlenbündel auf.

Detektorseitig sind drei als Fotoelemente ausgeführte Detektoren D₀, D₁ und D₂ vorgesehen, die transversal zur Meßrichtung X, d.h. in Y-Richtung, angeordnet sind. Jeder der Detektoren ist einem der drei Bereiche B₁, B₂, B₃ zugeordnet und in Y-Richtung so angeordnet, daß der jeweilige Detektor lediglich von den aus dem zugehörigen Bereich kommenden Signalanteilen beaufschlagt wird.

Der erste Bereich B₁ ist in der dargestellten Ausführungsform der erfindungsgemäßen Positionsmeßeinrichtung transparent ausgeführt, d.h. dieser Bereich B₁ läßt das durchtretende Lichtstrahlenbündel b₁ ungebeugt auf das Maßstabgitter 2 treffen, von dem es entsprechend dem Einfallswinkel reflektiert wird und wieder durch das Gitter 1 tritt. Aufgrund der richtungsselektiven Ausführung der beiden anderen Bereiche B₂, B₃, d.h. der dort erfolgenden Ablenkung in die +1. Beugungsordnung, wirkt relativ zu diesen Bereichen auch der Bereich B₁ richtungsselektiv.
Da das vom Maßstabgitter 2 reflektierte Lichtstrahlenbündel b₁ in transversaler Richtung beim zweiten Durchgang durch den Bereich B₁ des Abtastgitters 1 nicht gebeugt wird, kann es quasi als resultierende 0. transversale Beugungsordnung b₁' bezeichnet werden. Die Lichtanteile des Lichtstrahlenbündels b₁, die beim zweiten Durchtritt durch das Abtastgitter 1 von den Bereichen B₂ und B₃ transversal abgelenkt werden, tragen nichts zur resultierenden und entsprechend detektierten 0. transversalen Beugungsordnung b₁' bei.
Das Abtastgitter 1 wirkt also in Richtung der 0. transversalen Beugungsordnung wie ein Amplitudengitter. Der in der Richtung der 0. transversalen Beugungsordnung registrierte Lichtanteil tritt lediglich durch den Bereich B₁, nicht aber durch die strukturierten Bereiche B₂, B₃ des Abtastgitters 1. Die Abtaststruktur erscheint in dieser Detektionsrichtung deshalb als Amplitudenteilung mit periodisch angeordneten, transparenten Bereichen B₁ und opaken Bereichen B₂, B₃.

Betrachtet man die beim ersten Durchgang durch den Bereich B₁ des Abtastgitters 1 gehenden und beim zweiten Durchgang durch das Abtastgitter 1 die in Richtung der +1. transversalen Beugungsordnung abgelenkten Strahlenbündel des Bereiches B₂, so erhält man in der Richtung von b₂' keine Signalanteile mehr von den Bereichen B₁ und B₃. Über den entsprechenden Detektor D₁ wird lediglich Licht aus dem Bereich B₂ erfaßt. Die Abtaststruktur erscheint somit in dieser Detektionsrichtung als Amplitudenteilung mit periodisch angeordneten opaken Bereichen B₁, transparenten Bereichen B₂ und opaken Bereichen B₃.

Betrachtet man die beim ersten Durchgang durch den Bereich B₁ des Abtastgitters 1 gehenden und beim zweiten Durchgang durch das Abtastgitter 1 die in Richtung der +1. transversalen Beugungsordnung abgelenkten Strahlenbündel des Bereiches B₃, so erhält man in der Richtung von b₃' keine Signalanteile mehr von den Bereichen B₁ und B₂, sondern erfaßt über den entsprechenden Detektor D₂ lediglich Licht aus dem Bereich B₃. Die Abtaststruktur erscheint somit in dieser Detektionsrichtung als Amplitudenteilung mit periodisch angeordneten opaken Bereichen B₁ und B₂ und transparenten Bereichen B₃.

Da das Abtastgitter 1 pro Teilungsperiode d jeweils drei solcher Bereiche B₁, B₂, B₃ aufweist, wirkt es unter diesen Gesichtspunkten in jeder einzelnen der drei transversalen Beugungsrichtungen respektive Detektionsrichtungen als Amplitudengitter. Das Verhältnis der transparentem Bereiche zu Teilungsperiode beträgt jeweils t = 1/3.
Da jede Teilungsperiode im dargestellten Ausführungsbeispiel drei Bereiche gleicher Breite aufweist, wird eine Teilungsperiode von 360° in drei gleiche Anteile von je 120° aufgeteilt. Dies bewirkt im Hinblick auf die drei transversalen Beugungsrichtungen zwischen den aus den verschiedenen Bereichen gewonnenen Signalen eine Phasenverschiebung von jeweils 120°. Der Bereich B₁ liefert im dargestellten Ausführungsbeispiel der vorliegenden Erfindung das 0°-Signal, die Bereiche B₂ und B₃ die +120°- und -120°-Signale.

Wäre eine Teilungsperiode in vier Bereiche gleicher Breite aufgeteilt, die jeweils winkelmäßig unterschiedliche Ablenkungen in Richtung zugeordneter Detektoren bewirken, so ließen sich in analoger Weise in den vier transversalen Ablenkrichtungen vier Signale detektieren, die zueinander jeweils eine Phasenverschiebung von 90° aufweisen. So wäre es etwa möglich, vier Bereiche gleicher Breite D/4 vorzusehen. Hiervon könnten zwei Bereiche analog zu den beiden Bereichen B₂ und B₃ ausgeführt sein. Um 180° versetzt hierzu sind hierzu die beiden Bereiche B₂' und B₃' angeordnet, die so dimensioniert sind, daß eine Ablenkung in die -1. Beugungsordnung resultiert.

Im Gegensatz zu einem als Phasengitter ausgeführten Abtastgitter überlagern sich bei einem Amplituden-Abtastgitter gemäß der vorliegenden Erfindung die resultierenden longitudinalen Beugungsordnungen in Phase; somit ist es möglich, mit einem Detektor mehrere longitudinale Beugungsordnungen aufzusummieren und trotzdem einen hinreichend hohen Modulationsgrad sicherzustellen. Die Teilungsperiode des abgetasteten Maßstabes kann somit trotz kleiner Kondensorbrennweite relativ grob gewählt werden.

In Figur 5 ist der Strahlengang im beschriebenen Ausführungsbeispiel der vorliegenden Erfindung nochmals schematisiert dargestellt. Dabei sind sowohl das Abtastgitter 1 als auch das Maßstabgitter 2 nur ausschnittsweise erkennbar.
Beim ersten Durchgang durch das Abtastgitter 1 werden die Strahlen b₁, b₂, b₃ aus den entsprechenden Bereichen B₁, B₂, B₃ des Abtastgitters 1 erzeugt. Nach erfolgter Reflexion und Beugung an der Maßstabteilung 2 beaufschlagen die Strahlen b₂ und b₃ aufgrund der Ablenkung durch die transversal strukturierten Bereiche B₂ und B₃ das Abtastgitter 1 an untereinander räumlich getrennten Stellen. Diese Stellen sind auch vom zweiten Auftreffpunkt des Strahles b₁ auf dem Abtastgitter 1 räumlich getrennt. An den unterschiedlichen Auftreff-Stellen der Strahlen b₁, b₂, b₃ auf dem Abtastgitter 1 erfolgt jeweils eine nochmalige Ablenkung in drei verschiedene Raumrichtungen. In Richtung der Detektoren würden demzufolge Strahlanteile gelangen, die beim ersten Durchgang ursprünglich durch verschiedene Bereiche B₁, B₂, B₃ gingen und beim zweiten Passieren des Abtastgitters 1 auch an verschiedenen Punkten abgelenkt wurden. Es wäre in diesem Fall dann nicht gewährleistet, daß auf jeden der drei Detektoren auch nur die Signalanteile mit der gewünschten Phasenlage zueinander auftreffen; vielmehr käme es zu einer inkohärenten Überlagerung von Signalanteilen unterschiedlicher Phase derart, daß die gewünschte Phasentrennung auf den Detektoren nicht mehr möglich wäre.

Zur Auswertung ist jedoch vorgesehen, daß die drei Detektoren um jeweils 120° phasenversetzte Ausgangssignale liefern, d.h. ein 0°-Signal, ein +120°-Signal sowie ein -120°-Signal. Um dies sicherzustellen, ist es deshalb vorteilhaft, dem Abtastgitter 1 in Y-Richtung eine Amplitudenstruktur A derart zu überlagern, daß nur die Interferenzsignale b₁', b₂', b₃' zur Gewinnung der Abtastsignale beitragen, die beim ersten Durchgang durch einen einzigen der Bereiche des Abtastgitters 1 treten. In der Darstellung der Figur 5 wurde die Amplitudenstruktur A derart gewählt, daß lediglich die beim ersten Durchgang durch den transparenten Bereich B₁ gehenden Strahlen detektiert werden. Die im unteren Teil der Figur 5 mit unterbrochenen Linien dargestellten Teilstrahlen werden durch die gewählte Amplitudenstruktur A demzufolge ausgeblendet. Allgemein kann die Amplitudenstruktur A demzufolge als Blende angesehen werden, die unerwünschte Signalanteile ausblendet. Hierbei ist im Gegensatz zum beschriebenen Ausführungsbeispiel auch eine Dimensionierung der Amplitudenstruktur derart möglich, daß letztlich lediglich Signalanteile auf die Detektoren gelangen, die beim ersten Durchgang durch das Abtastgitter durch den zweiten Bereich gingen usw.

Wie auch aus dem dargestellten Ausführungsbeispiel des Abtastgitters in Figur 3 hervorgeht, ist die Amplitudenstruktur in Y-Richtung, d.h. transversal zur Meßrichtung X ebenfalls periodisch ausgeführt. Die mit A bezeichneten Bereiche des Abtastgitters sind nicht-transparent bzw. absorbierend ausgeführt und derart zueinander angeordnet, daß lediglich die beim ersten Durchgang durch das Abtastgitter durch einen einzigen der richtungsselektiven Bereiche abgelenkten Teilstrahlen auf die Detektoren gelangen.

Der dargestellte Ausschnitt des Abtastgitters 1 in Figur 5 zeigt somit nur einen Streifen der in Figur 3 gezeigten Beugungsstruktur und einen benachbarten Blendenstreifen A.

In einer weiteren Ausgestaltung der vorliegenden Erfindung kann der Bereich B₁ auch als ein transversal geblaztes Gitter ausgeführt sein, dessen Parameter jedoch von denen der in den Bereichen B₂ und B₃ befindlichen Gitter abweichen. Es ist demnach keinesfalls zwingend, daß einer der richtungsselektiv wirkenden Bereiche transparent ausgeführt ist; entscheidend ist lediglich, daß die verschiedenen Bereiche eine unterschiedliche Richtungsselektivität aufweisen.

Um die Abbildung der Beugungsordnungen auf die Detektoren zu optimieren, kann desweiteren die Gitterkonstante der mit transversalen Gittern versehenen Bereiche in transversaler Richtung ortsabhängig variieren.

Es ergeben sich demzufolge neben der dargestellten Ausführungsform eine Reihe weiterer Möglichkeiten zur Ausgestaltung der vorliegenden Erfindung. Hierzu sei beispielsweise darauf hingewiesen, daß die erfindungsgemäße Positionsmeßeinrichtung auch in einer Durchlicht-Anordnung realisierbar ist; hierbei ist ein erstes Abtastgitter, ein Maßstabgitter sowie ein weiteres Vereinigungsgitter vorgesehen. Das Abtastgitter wäre in dieser Ausführungsform demzufolge gemäß der vorliegenden Erfindung auszuführen, d.h. mit den vorab beschriebenen richtungsselektiven Transversalstrukturen auszubilden.

## Patentansprüche

1. Lichtelektrische Positionsmeßeinrichtung, bei der Licht einer Lichtquelle (L) von mehreren in Meßrichtung (X) relativ zueinander verschiebbaren, bestimmte Teilungsperioden aufweisenden Gittern (1, 2) positionsabhängig moduliert wird, indem mindestens an einem der Gitter gebeugte Lichtstrahlenbündel miteinander interferieren und mehrere Fotodetektoren (D₀, D₁, D₂) zur Erfassung positionsabhängiger, gegeneinander phasenverschobener Signale vorgesehen sind, wobei zumindest eines der Gitter (1) innerhalb jeder seiner in Meßrichtung (X) orientierten Teilungsperioden (d) mindestens drei in Meßrichtung (X) hintereinander angeordnete, im wesentlichen senkrecht zur Meßrichtung (X) verlaufende Bereiche (B₁, B₂, B₃) aufweist, wobei jeder dieser Bereiche (B₁, B₂, B₃) unterschiedliche richtungsselektive Eigenschaften besitzt, und daß jedes der aus diesen Bereichen (B₁, B₂, B₃) abgeleiteten Signalstrahlenbündel einen zugeordneten Fotodetektor (D₀, D₁, D₂) beaufschlagt, wobei diese im wesentlichen transversal zur Meßrichtung (X) angeordnet sind.

2. Lichtelektrische Positionsmeßeinrichtung nach Anspruch 1, wobei wenigstens zwei Bereiche (B₂, B₃) als geblazte Phasengitter ausgebildet sind, die transversal zur Meßrichtung orientiert sind.

3. Lichtelektrische Positionsmeßeinrichtung nach Anspruch 1, wobei wenigstens zwei Bereiche (B₂, B₃) jeweils ein transversal zur Meßrichtung (X) orientiertes Phasengitter bilden, dessen Parameter derart gewählt sind, daß die nullte Beugungsordnung (0.) unterdrückt wird.

4. Lichtelektrische Positionsmeßeinrichtung nach einem der Ansprüche 1 bis 3, wobei innerhalb einer Teilungsperiode (d) des Gitters (1) drei in Meßrichtung identisch breite Bereiche (B₁, B₂, B₃) angeordnet sind, unter denen der erste ein transparenter Bereich (B₁) ist, und ein erster Fotodetektor (D₁) zur Erfassung der Teilstrahlenbündel aus dem zweiten Bereich (B₂) und ein zweiter Fotodetektor (D₂) zur Erfassung der Teilstrahlenbündel aus dem dritten Bereich (B₃) vorgesehen ist und daß die Signale der beiden Fotodetektoren (D₁, D₂) um 120° gegeneinander phasenverschoben sind, wobei die Teilstrahlenbündel aus dem transparenten, ersten Bereich (B₁) auf einen dritten Fotodetektor (D₀) gerichtet sind, dessen Ausgangssignal gegenüber den beiden vorgenannten Signalen ebenfalls 120° Phasenversatz aufweist.

5. Lichtelektrische Positionsmeßeinrichtung nach Anspruch 4, wobei der zwirk und dritte Bereich als transversal zur Meßrichtung verlaufende Gitter ausgebildet sind, deren Gitterkonstanten in transversaler Richtung zur Meßrichtung (X) ortsabhängig variieren.

6. Lichtelektrische Positionsmeßeinrichtung nach Anspruch 1, wobei das Licht der Lichtquelle (L) mittels einer Linse (K) kollimiert auf ein Abtastgitter mit verschiedenen Bereichen trifft und nach dem Abtastgitter ein Maßstabgitter vorgesehen ist und am Maßstabgitter transmittierte Teilstrahlenbündel über ein Vereinigungsgitter mittels einer weiteren Linse auf mehrere Fotodetektoren fokussiert werden, wobei das Abtastgitter das zumindest eine Gitter (1) mit den Bereichen (B₁, B₂, B₃) ist.

7. Lichtelektrische Positionsmeßeinrichtung nach Anspruch 1, wobei das Licht der Lichtquelle (L) mittels einer Linse (K) kollimiert auf ein Abtastgitter (1) mit Bereichen (B₁, B₂, B₃) trifft, daß nach dem Abtastgitter (1) ein reflektierendes Maßstabgitter (2) vorgesehen ist und die reflektierten Teilstrahlenbündel wieder durch das Abtastgitter(1) gebeugt werden und mittels der Linse (K) auf mehrere Fotodetektoren (D₀, D₁, D₂) fokussiert werden, wobei das Abtastgitter das zumindest eine Gitter (1) mit den Bereichen (B₁, B₂, B₃) ist.

8. Lichtelektrische Positionsmeßeinrichtung, nach Anspruch 6 oder 7, wobei das Maßstabgitter (2) und das Abtastgitter (1) in Meßrichtung (X) die gleiche Teilungsperiode aufweisen.

9. Lichtelektrische Positionsmeßeinrichtung nach Anspruch 6 oder 7, wobei das Maßstabgitter (2) ein Phasengitter ist.

10. Lichtelektrische Positionsmeßeinrichtung nach Anspruch 1, wobei das Abtastgitter (1) eine transversal zur Abtastrichtung (X) orientierte, blendenartige Amplitudenstruktur (A) trägt, um unerwünschte Signalanteile auszublenden.

11. Lichtelektrische Positionsmeßeinrichtung nach Anspruch 10, wobei die Amplitudenstruktur (A) derart ausgebildet ist, daß detektorseitig lediglich diejenigen Signalanteile (b₁) erfaßbar sind, die beim ersten Durchtritt der einfallenden Strahlenbündel durch einen einzigen der Bereiche (B₁) treten, während die durch die anderen Bereiche (B₂, B₃) tretenden Signalanteile (b₂, b₃) ausgeblendet werden.

12. Lichtelektrische Positionsmeßeinrichtung nach Anspruch 2, wobei sämtliche Bereiche innerhalb einer Teilungsperiode als geblazte Phasengitter ausgebildet sind, die transversal zur Meßrichtung orientiert sind.

## Claims

1. Photoelectric position measuring device wherein light from a light source (L) is modulated as a function of position by a plurality of gratings (1, 2), displaceable relative to one another in the measuring direction (X) and having specific division periods, by light beams diffracted at at least one of the gratings interfering with one another and a plurality of photodetectors (D₀, D₁, D₂) being provided to detect position-dependent signals which are phase-shifted in respect of one another, at least one of the gratings (1) having within each of its division periods (d) oriented in the measuring direction (X) at least three regions (B₁, B₂, B₃) disposed the one behind the other in the measuring direction (X) and extending substantially perpendicular to the measuring direction (X), each one of these regions (B₁, B₂, B₃) having different directionally selective properties, and that each signal ray beam deflected from these regions (B₁, B₂, B₃) impinges on an associated photodetector (D₀, D₁, D₂), said photodetectors being disposed substantially transversely with respect to the measuring direction (X).

2. Photoelectric position measuring device according to claim 1, wherein at least two regions (B₂, B₃) are configured as blazed phase gratings which are oriented transversely with respect to the measuring direction.

3. Photoelectric position measuring device according to claim 1, wherein at least two regions (B₂, B₃) respectively form a phase grating oriented transversely with respect to the measuring direction (X), the parameters of said grating being so selected that the zero order of diffraction (0th) is suppressed.

4. Photoelectric position measuring device according to one of claims 1 to 3, wherein three regions (B₁, B₂, B₃) of identical width in the measuring direction are disposed within one division period (d) of the grating (1), the first of these regions being a transparent region (B₁), and a first photodetector (D₁) being provided to detect the partial ray beams from the second region (B₂) and a second photodetector (D₂) to detect the partial ray beams from the third region (B₃), and that the signals of the two photodetectors (D₁, D₂) are phase-shifted by 120° in respect of one another, the partial ray beams from the transparent first region (B₁) being directed onto a third photodetector (D₀), the output signal of which also has a phase shift of 120° in respect of the two above-mentioned signals.

5. Photoelectric position measuring device according to claim 4, wherein the second and the third regions are configured as gratings which extend transversely with respect to the measuring direction and the grating constants of which vary in the transverse direction with respect to the measuring direction (X) as a function of position.

6. Photoelectric position measuring device according to claim 1, wherein the light from the light source (L), collimated by means of a lens (K), impinges on a scanning grating having different regions, and after the scanning grating a scale grating is provided and at the scale grating transmitted partial ray beams are focused via a union grating by means of an additional lens on a plurality of photodetectors, the scanning grating being the at least one grating (1) having the regions (B₁, B₂, B₃).

7. Photoelectric position measuring device according to claim 1, wherein the light from the light source (L), collimated by means of a lens (K), impinges on a scanning grating (1) having regions (B₁, B₂, B₃), that after the scanning grating (1) a reflecting scale grating (2) is provided and the reflected partial ray beams are diffracted again by the scanning grating (1) and are focused by means of the lens (K) on a plurality of photodetectors (D₀, D₁, D₂), the scanning grating being the at least one grating (1) having the regions (B₁, B₂, B₃).

8. Photoelectric position measuring device according to claim 6 or 7, wherein the scale grating (2) and the scanning grating (1) have the same division period in the measuring direction (X).

9. Photoelectric position measuring device according to claim 6 or 7, wherein the scale grating (2) is a phase grating.

10. Photoelectric position measuring device according to claim 1, wherein the scanning grating (1) bears a screen-like amplitude structure (A) oriented transversely with respect to the scanning direction (X), in order to screen out undesired signal portions.

11. Photoelectric position measuring device according to claim 10, wherein the amplitude structure (A) is so configured that on the detector side only those signal portions (b₁) can be detected which pass through a single one of the regions (B₁) during the first passage of the incident ray beams, whilst the signal portions (b₂, b₃) passing through the other regions (B₂, B₃) are screened out.

12. Photoelectric position measuring device according to claim 2, wherein all the regions within a division period are configured as blazed phase gratings which are oriented transversely with respect to the measuring direction.

## Revendications

1. Dispositif photo-électrique de mesure de positions, dans lequel de la lumière d'une source lumineuse (L) est modulée en fonction de la position par plusieurs réseaux (1, 2) mobiles les uns par rapport aux autres dans la direction de mesure (X), des faisceaux de lumière diffractés sur l'un au moins des réseaux interférant les uns avec les autres, et plusieurs détecteurs photo-électriques (D₀, D₁, D₂) étant prévus pour la détection de signaux dépendants de la position, déphasés les uns par rapport aux autres, au moins un des réseaux (1) présentant, à l'intérieur de chacune de ses périodes de division (d) orientées dans la direction de mesure, au moins trois zones de division (B₁, B₂, B₃) qui sont disposées les unes à la suite des autres, essentiellement perpendiculairement à la direction de mesure (X), chacune des zones de division (B₁, B₂, B₃) ayant des caractéristiques directionnelles différentes et chacun des faisceaux de rayons dérivé de ces zones (B₁, B₂, B₃) arrivant sur un détecteur photo-électrique (D₀, D₁, D₂) associé, lesdits détecteurs étant disposés essentiellement transversalement à la direction de mesure (X).

2. Dispositif photo-électrique de mesure de positions selon la revendication 1, dans lequel au moins deux zones (B₂, B₃) sont conformées en réseaux de phase blazés, qui sont orientés transversalement à la direction de mesure.

3. Dispositif photo-électrique de mesure de positions selon la revendication 1, dans lequel au moins deux zones (B₂, B₃) forment chaque fois un réseau de phase orienté transversalement à la direction de mesure, dont les paramètres sont choisis de manière à éliminer l'ordre de diffraction zéro (0.).

4. Dispositif photo-électrique de mesure de positions selon une des revendications 1 à 3, dans lequel il est prévu, à l'intérieur d'une période de division (d) du réseau (1), trois zones de division (B₁, B₂, B₃) de largeur identique dans la direction de mesure, parmi lesquelles la première est une zone transparente (B₁), un premier détecteur photo-électrique (D₁) pour détecter le faisceau partiel en provenance de la zone (B₂) et un deuxième détecteur photo-électrique (D₁) pour détecter le faisceau partiel en provenance de la zone (B₃), et dans lequel les signaux des deux détecteurs photo-électriques (D₁, D₂) sont mutuellement déphasés de 120°, les faisceaux partiels en provenance de la zone transparente (B₁) étant dirigés sur un troisième détecteur photo-électrique (D₀), dont le signal de sortie est lui aussi déphasé de 120° par rapport aux deux signaux précédents.

5. Dispositif photo-électrique de mesure de positions selon la revendication 4, dans lequel les deuxième et troisième zones sont conformées en réseaux s'étendant transversalement à la direction de mesure, dont les constantes de réseau dans la direction transversale à la direction de mesure (X) varient en fonction du lieu.

6. Dispositif photo-électrique de mesure de positions selon la revendication 1, dans lequel la lumière de la source de lumière (L), collimatée à l'aide d'une lentille (K), arrive sur un réseau de palpage comportant plusieurs zones, dans lequel un réseau de règle est prévu derrière le réseau de palpage, et dans lequel les faisceaux partiels transmis au niveau du réseau de règle sont focalisés via un réseau de regroupement, au moyen d'une lentille supplémentaire, sur plusieurs détecteurs photo-électriques, le réseau de palpage étant le réseau (1), au nombre d'au moins un, avec les zones (B₁, B₂, B₃).

7. Dispositif photo-électrique de mesure de positions selon la revendication 1, dans lequel la lumière de la source de lumière (L) collimatée à l'aide d'une lentille (K) arrive sur un réseau de palpage (1) avec des zones (B₁, B₂, B₃), dans lequel un réseau de règle (2) réflechissant est prévu derrière le réseau de palpage (1) et dans lequel les faisceaux partiels réfléchis sont de nouveau diffractés par le réseau de palpage (1) et focalisés sur plusieurs détecteurs photo-électriques (D₀, D₁, D₂) au moyen de la lentille supplémentaire (K), le réseau de palpage étant le réseau (1), au nombre d'au moins un, avec les zones (B₁, B₂, B₃).

8. Dispositif photo-électrique de mesure de positions selon la revendication 6 ou 7, dans lequel le réseau de règle (2) et le réseau de palpage (1) présentent la même période de division dans la direction de mesure (X).

9. Dispositif photo-électrique de mesure de positions selon la revendication 6 ou 7, dans lequel le réseau de règle (2) est un réseau de phase.

10. Dispositif photo-électrique de mesure de positions selon la revendication 1, dans lequel le réseau de palpage (1) porte une structure d'amplitude (A) formant filtre, orientée transversalement à la direction de palpage (X), pour éiminer les parties de signal indésirables.

11. Dispositif photo-électrique de mesure de positions selon la revendication 10, dans lequel la structure d'amplitude (A) est conformée de telle sorte que côté détecteur, seules soient détectées les parties de signal (b₁), qui traversent seulement une (B₁) des zones lors du premier passage du faisceau incident, tandis que les parties de signal (b₂, b₃) qui traversent les zones (B₂, B₃) sont éliminées.

12. Dispositif photo-électrique de mesure de positions selon la revendication 2, dans lequel toutes les zones à l'intérieur d'une période de division sont conformées en réseaux de phase blazés, qui sont orientés transversalement à la direction de mesure.
